# EUROPEAN PATENT APPLICATION

(11) **EP 1 555 448 A2**
(43) Date of publication of application: **20.07.2005**
(21) Application number: 05250170.7
(22) Date of filing: 14.01.2005
(51) Int. Cl.: F16C 33/78, F16C 33/66

(54) **Rolling bearing for use in vehicle**

(30) Priority: 14.01.2004 JP 2004007084; 04.03.2004 JP 2004061116; 10.03.2004 JP 2004067092; 12.07.2004 JP 2004204116
(71) Applicant: NTN CORPORATION, Osaka-shi, Osaka 550-0003 (JP)
(72) Inventor: Asao, Mitsunari c/o NTN Corporation, Mie 511-8678 (JP); Goto, Tomoaki c/o Ntn Corporation, Kuwana-shi, Mie 511-8678 (JP); Egami, Masaki c/o NTN Corporation, Kuwana-shi Mie 511-8678 (JP)
(74) Representative: Lamb, Martin John Carstairs

(57) **Abstract**

A rolling bearing (1) for use in a vehicle, containing a sealing member for sealing urea compound-containing grease, in which an elastic body deteriorates to a low extent when the rolling bearing is subjected to a high temperature and which is capable of maintaining a preferable sealing performance for a long time and excellent in reliability and durability.

The rolling bearing (1) has an inner ring (2), an outer ring (3), a plurality of rollers (4) disposed between said inner ring (2) and said outer ring (3), and a sealing member (6), for sealing grease on the periphery of said rollers (4), provided at an opening portion disposed at both ends of said inner ring (2) and said outer ring (3) in the axial direction thereof. The grease-sealing member (6) has a rubber molding which contacts the grease. The rubber molding is formed by molding a curable fluororubber composition consisting of a copolymer containing tetrafluoroethylene, propylene, and a crosslinkable monomer consisting of unsaturated hydrocarbon, having two to four carbon atoms, in which a part of the hydrogen atoms is substituted with fluorine atoms.

## Description

### Background of the Invention

The present invention relates to a rolling bearing for use in a vehicle and more particularly to a rolling bearing for use in electric auxiliary devices or supportingmembers of the vehicle. The rolling bearing for use in the electric auxiliary devices of the vehicle is used for an alternator, a flywheel damper, a fan coupling, an electromagnetic clutch, a compressor, and an idler pulley. The present invention also relates to a construction for supporting the flywheel damper and a fan-coupling apparatus.

Owing to a recent growing demand for development of small vehicles, lightweight vehicles, the expansion of the resident space therein, and the improvement of silence therein, attempts are being made to spread the use of an FF vehicle (front engine and front drive), manufacture small electric auxiliary devices of vehicles, manufacture lightweight vehicles, reduce the space inside the engine room, and the enclosing of the engine room. On the other hand, there is a growing demand for a high output and a high efficiency for the performance of various apparatuses of the vehicle. Thus the present tendency is to compensate the miniaturization-caused reduction of the output of the electric auxiliary devices of the vehicle provided inside the engine room by rotating them at high speeds.

The driving shaft for transmitting the driving force of the engine of the vehicle to each wheel thereof is divided into a propeller shaft and a driving shaft depending on the portion to which the driving force is transmitted. In dependence on driving systems, the vehicle is divided into a front engine and front drive vehicle (FF vehicle) , a front engine and rear drive vehicle (FR vehicle), a four-wheel drive vehicle (4WD vehicle), and a rear engine and rear drive vehicle (RR vehicle). The propeller shaft is used mainly in the FR vehicle and the 4WD vehicle.

As examples of the electric auxiliary devices of the vehicle, the alternator, the flywheel damper, the fan coupling, the electromagnetic clutch, the compressor, and the idler pulley are described below.

The flywheel damper shifts a resonance frequency for a torsional vibration generated by the fluctuation of a torque outputtedby the engine when the output of the engine is transmitted to the driven system to thereby damp the fluctuation of the rotation of a driving system and reduce unpleasant noises and vibrations. Thereafter the flywheel damper transmits reduced noises and vibrations to a driven system.

The rolling bearing for use in the flywheel damper mutually supports a transmission-side gyrating mass of a construction for supporting the flywheel damper and an engine-side gyrating mass thereof which receives and damps a torsional vibration generated by a fluctuation of a torque outputted by the engine and transmits the damped torsional vibration to the transmission-side gyrating mass, while an inner ring and an outer ring of the rolling bearing are rotating.

In Japanese Patent Application Laid-Open No.2000-55132, there is disclosed the following art relating to the improvement of durability of the bearing for use in flywheel damper which transmits the output of the engine to the driven system. According to the disclosure, to allow the flywheel damper to withstand severe conditions of environment by damping torsional vibrations generated by the fluctuation of the output of the engine, the rolling bearing supports the transmission-side gyrating mass and the engine-side gyrating mass mutually. Grease containing urea as its thickening agent is sealed inside the rolling bearing. The inner ring and the outer ring are made of steel. The residual amount of austenite is set to not more than 8 wt%. The hardness of the steel is set to not less than that of HRC60. Synthetic oil is used as the base oil of the grease. The amount of the grease to be used is set to 40 to 50 vol% of the space inside the bearing. The seal is made of fluororubber. The flywheel damper has a long life in that the bearing ring has a low degree of dimensional change and hardness reduction and that the grease is heat-resistant and fretting-resistant.

The bearing mutually supporting the engine-side gyrating mass and transmission-side gyrating mass of the flywheel damper has a contact seal at its both vacant sides to the axial direction. Each of both seals has a plurality of lip portions. Disclosed in Japanese Patent Application Laid-Open No.2000-179560 is a method for forming the air vent slit in the innermost lip portion of the contact seal disposed at the side opposite to the engine-side gyrating mass. This method prevents an excessive rise of the internal pressure which occurs owing to a temperature rise at the engine-side gyrating mass and malfunction which is brought about by slip of the clutch disk, even though leak of grease occurs.

Aviscous fluid is sealed inside the fan-coupling apparatus. A housing having an air-feeding fan mounted on its peripheral surface is coupled to a rotor directly connected to the engine through a bearing. By utilizing the shear resistance of the viscous fluid which increases and decreases in response to an atmospheric temperature, the fan-coupling apparatus controls the amount of a driving torque transmitted from the engine and the number of rotations of the fan, thereby feeding optimum air corresponding to the temperature of the engine.

An art relating to the bearing, for use in the fan-coupling apparatus, whose rotation speed fluctuates according to the rotation speed of the engine is described below. According to the disclosure in Japanese Patent Application Laid-Open No.10-184356, the rotational torque of the engine is transmitted to the driving disk through the one-way clutch to reduce the rotational vibration to be transmitted to the driving disk and thereby reduce the design strength of the hydrodynamic fan-coupling apparatus and reduce the manufacturing cost.

Disclosed in Japanese Patent Application Laid-Open No. 10-318291 is the bearing for use in the fan-coupling apparatus having a rotational characteristic improved at a low temperature by sealing grease containing base oil whose viscosity is not more than 2000 cSt at 0°C inside the bearing. Disclosed in Japanese Patent Application Laid-Open No.2000-257639 is also the bearing for use in the fan-coupling apparatus having a rotational characteristic improved at a low temperature by setting the radius of the groove of the inner ring to not less than 51% nor more than 54% of the diameter of the ball of the bearing and by sealing grease containing base oil whose kinematic viscosity is not less than 4000 cSt nor than 15000 cSt at -20°C inside the bearing.

To actuate the air conditioner for a vehicle, the power of the engine is transmitted to an electromagnetic clutch through a driving belt. The electromagnetic clutch is connected to the compressor to actuate the air conditioner. A deep groove ball bearing and a sealed-type double row angular ball bearing are used as the bearing for the electromagnetic clutch. Aneedle-like roller bearing is used as the bearing for the compressor.

The idler pulley is used as a belt tensioning part for the driving belt transmitting the engine power to the electric auxiliary devices of the vehicle. The idler pulley has the function of a pulley for imparting a tensile force to the driving belt when the distance between rotating shafts is fixed. The idler pulley has another function of an idler used for changing the travel direction of the belt or preventing interference with obstacles to thereby reduce the volume of the engine chamber. The deep groove ball bearing is used as the bearing for the idler pulley.

As described above, the electromagnetic clutch, the compressor, and the idler pulley are demanded to perform high-speed operation to make them compact and lightweight and not to make them work noisily.

The rolling bearing for use in the electric auxiliary devices of the vehicle is demanded to have reliability at a high temperature, high grease-sealing performance, and high durability to such an extent that the rolling bearing withstands the torsional vibration generated by the fluctuation of the torque outputted by the engine in the range from 1000 rpm to 10000 rpm and its rotation speed change and that the rolling bearing withstands very severe conditions of environment having a high temperature not less than 180°C, when the vehicle is driven at a high speed in summer.
The rolling bearing is applied to the use in the vehicle, such as the electric auxiliary devices and the supporting members of the vehicle. Urea compound-containing grease is mainly used to lubricate the rolling bearing. Fluorine grease is also used to lubricate the rolling bearing for the use in the vehicle [when the electric instrument parts and the like are used] in a severe temperature condition but the fluorine grease is very expensive. As disclosed in Japanese Patent Application Number Tokugan 2002-100556, the present inventors proposed a mixture of any urea compound-containing grease and the fluorine grease as a method of realizing performance equivalent to that of the fluorine grease at a low cost.

And also Japanese Patent Application Laid-Open No. 2003-239997 disclosed the method that the mixture of the fluorine grease and other one except the fluorine grease was used as the grease for the rolling bearing, in order to cope with few kind of the anti-corrosion agent capable to be added to the grease.

The sealing member for use in the rolling bearing and the supporting members of the vehicle are demanded to be heat-resistant, when they are used in a severe temperature condition. Acrylic rubber has been hitherto used as an elastic body of the sealing member. However, the acrylic rubber is not sufficiently heat-resistant. Thus instead recently fluororubber is used increasingly.

As examples of fluororubber conventionally used, a binary copolymer (VDF-HFP) of vinylidene fluoride and hexafluoropropylene, and a tertiary copolymer (VDF-HFP-TFE) of the vinylidene fluoride, the hexafluoropropylene, and tetrafluoroethylene are mainly used. These fluororubbers, so-called FKM, are capable of having a sufficient durability by using them in combination with fluorine grease.

When the fluororubber and the urea compound-containing grease are combined with each other, the urea compound causes crosslinking of the fluororubber to proceed. Consequently the fluororubber hardens.

As disclosed in Japanese Patent Application Laid-Open No. 2001-65578, there is proposed a method of improving the durability of the rolling bearing by combining the urea compound-containing grease with a tertiary copolymer of vinylidene fluoride-tetrafluoroethylene-propylene or a binary copolymer of tetrafluoroethylene-propylene.

However, it is difficult to prevent the above-described tertiary copolymer and the binary copolymer from deteriorating with age, under the condition of high temperature and high-speed in the use in electric auxiliary devices or supporting members of the vehicle.

When the rubber elastic body used for the sealing member hardens, the sealing performance thereof deteriorates. Thereby grease leaks. Consequently the life of the rolling bearing becomes short, a contact pressure on the sealing surface becomes high or the rotational torque of the rolling bearing becomes high. Thereby a frictional heat is generated and deterioration of the grease progresses.

### Summary of the Invention

The present invention has been made to solve the above-described problems. Therefore it is an object of the present invention to provide a bearing in which grease containing a urea compound is sealed and an elastic body of a sealing plate serving as a sealing member deteriorates little, maintains preferable sealing performance for a long time, and is excellent in reliability and durability. The bearing of the present invention is used for electric auxiliary devices of a vehicle and supporting members thereof.
The present invention relates to the rolling bearing for use in the vehicle, such as the electric auxiliary devices and the supporting members. As for the electric auxiliary devices, the rolling bearing is used for rotatable supporting the rotation part in the electric auxiliary devices in the vehicle. And as for the supporting members, the rolling bearing is used for rotatable supporting a driving shaft of the vehicle on a body of the vehicle.
A rolling bearing includes an inner ring, an outer ring, a plurality of rolling elements disposed between the inner ring and the outer ring, and a sealing member, provided at an opening portion of the inner ring and the outer ring disposed at an axial end thereof, for sealing grease disposed on a periphery of the rolling elements. The grease contains a urea compound. The sealing member for sealing grease to be enclosed in the rolling bearing includes a rubber molding which contacts at least the grease. The rubber molding is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

The above-described crosslinkable monomer is at least one monomer selected from the group consisting of trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene.

The copolymer contains vinylidene fluoride. The grease containing above-described urea compound is the mixture of the fluorine grease and the urea grease.

The rubber molding for use in the rolling bearing is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms. Therefore even when the sealing member is immersed in grease containing the urea compound, the sealing member deteriorates to a low extent in its properties and is capable of effectively preventing leak of the grease. Thereby the sealing member is capable of improving the durability of the rolling bearing.

The rolling bearing for use in electric auxiliary devices of a vehicle is used for an alternator, a flywheel damper, a fan coupling, an electromagnetic clutch, a compressor, and an idler pulley.

A rolling bearing for use in a constant velocity universal joint-supportingmember or a center supportingmember is a rolling bearing for use in a supporting member rotatably supporting a driving shaft of the vehicle on a body of the vehicle.

The present invention provides a construction for supporting a flywheel damper. In this construction, the rolling bearing for use in the flywheel damper mutually supports a transmission-side gyrating mass and an engine-side gyrating mass which receives and damps a torsional vibration generated by a fluctuation of a torque outputted by an engine and transmits the damped torsional vibration to the transmission-side gyrating mass.

The present invention provides a fan-coupling apparatus wherein a stirring chamber and an oil chamber in which a viscous fluid such as silicone oil is filled are provided inside a casing supporting an engine-cooling fan, a port is formed on a partitioning plate interposed between the oil chamber and the stirring chamber, an open degree-adjusting means for adjusting an open degree of the port according to a change of an atmospheric temperature, a drive disk is incorporated in the stirring chamber, a rotation of the drive disk is transmitted to the case through a viscous fluid which has flowed into the stirring chamber. A rolling bearing supporting a rotational shaft of the drive disk is the rolling bearing for use in the fan coupling.

The rolling bearing for use in the electric auxiliary devices of the vehicle is capable of withstanding a torsional vibration generated by the fluctuation of a torque outputted by the engine and a change in its rotation speed in the range from 1000 rpm to 10000 rpm. The rolling bearing is also capable of withstanding very severe conditions of environment having a high temperature not less than 180°C, when the vehicle is driven at a high speed in summer. Therefore it is possible to improve the durability of the rolling bearing supporting the transmission-side gyratingmass and the engine-side gyratingmass mutually, the construction for supporting the flywheel damper, and the fan-coupling apparatus.

When the rolling bearing of the present invention is used for the constant velocity universal joint-supporting member and the center supporting member, the rolling bearing is durable for a long time even when the peripheral temperature is -40°C to 150°C.

### Brief Description of the Drawings

Fig. 1 is a sectional view showing a rolling bearing.
Fig. 2 is a sectional view showing a sealing member.
Fig. 3 is a sectional view showing the construction of an alternator.
Fig. 4 is a sectional view, taken along a line A-O-B of Fig. 5, showing a construction for supporting a flywheel damper.
Fig. 5 is a broken-away front view showing the construction for supporting the flywheel damper.
Fig. 6 is a sectional view showing the construction of a fan-coupling apparatus when the fan-coupling apparatus rotates at a low speed.
Fig. 7 is a sectional view showing the construction of the fan-coupling apparatus when the fan-coupling apparatus rotates at a high speed.
Fig. 8 is a sectional view showing an electromagnetic clutch and a compressor.
Fig. 9 is a sectional view showing an idler pulley.
Fig. 10 is a schematic view showing the driving shaft of a four-wheel drive vehicle.
Fig. 11 is a sectional view showing a center supporting member.
Fig. 12 is a sectional view showing a constant velocity universal joint-supporting member.

### Detailed Description of the Preferred Embodiments

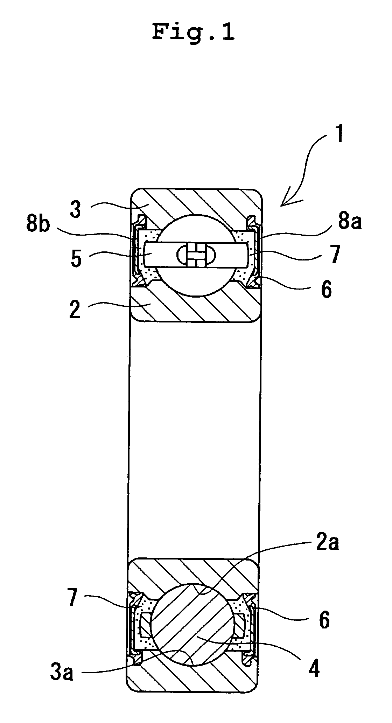

Fig. 1 shows an example of the rolling bearing of the present invention for use in a vehicle. Fig. 1 is a sectional view of a deep groove ball bearing in which grease is sealed.

A deep groove ball bearing 1 includes an inner ring 2 having an inner ring rolling surface 2a on its peripheral surface, an outer ring 3 concentric with the inner ring 2 and having an outer ring rolling surface 3a on its inner peripheral surface, and a plurality of rolling elements 4 disposed between the inner ring rolling surface 2a and the outer ring rolling surface 3a. A retainer 5 holding the rolling elements 4 and a sealing member 6 fixed to the outer ring 3 are provided at openings 8a and 8b of the inner ring 2 and the outer ring 3 respectively. The openings 8a and 8b are disposed at the axial end of the inner ring 2 and the outer ring 3 respectively. A grease 7 is essentially applied to the periphery of each rolling element 4.

A sealed-type plural angular ball bearing is applicable to use as the rolling bearing, because of the good properties being compactly prepared in small size, having small tilt of the shaft and good workability for assembling.

The sealing member 6 may consist of a rubber molding or a composite of the rubber molding and a rigid plate such as a metal plate, a plastic plate, and a ceramic plate. It is preferable to use the composite of the rubber molding and the metal plate because the composite of the rubber molding and the metal plate is durable and the rubber molding and the metal plate adhere to each other easily.

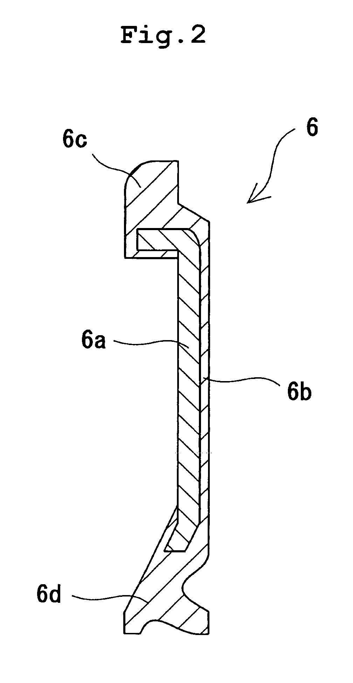

Fig. 2 shows an example of the sealing member 6 consisting of the composite of the rubber molding and the metal plate. The sealing member 6 is obtained by fixing a fluororubber molding 6b to a metal plate 6a such as a steel plate. Both a mechanical fixing method and a chemical fixing method can be used. It is preferable to adopt a fixing method of performing molding and cure at the same time when the fluororubber molding is cured, with the metal plate disposed in a curing mold.

The following three methods can be used to mount the sealing member 6 on the rolling bearing: (1) One end 6c of the sealing member 6 is fixed to the outer ring 3, whereas the other end 6d of the sealing member 6 is disposed along a V-groove of a sealing surface of the inner ring 2 to form a labyrinth gap. (2) One end 6c of the sealing member 6 is fixed to the outer ring 3, whereas the other end 6d of the sealing member 6 is brought into contact with a side surface of the V-groove of the sealing surface of the inner ring 2. (3) One end 6c of the sealing member 6 is fixed to the outer ring 3, whereas the other end 6d of the sealing member 6 is brought into contact with the side surface of the V-groove of the sealing surface of the inner ring 2. Further a slit for preventing suction is formed on a lip portion which contacts V-groove of the sealing surface of the inner ring 2 to form a low torque construction.

In any of the above-described mounting methods, the sealed grease 7 contacts the rubber molding 6b composing the sealing member 6. A portion of the rubber molding 6b that contacts the sealed grease 7 is at least made of a fluororubber molding. The rubber molding 6b may consist of the above-described fluororubber molding. Alternatively the rubber molding 6b may be composed as a laminate of the above-described fluororubber molding disposed at the portion that contacts the grease 7 and the conventional rubber molding disposed on the rear surface of the fluororubber molding.

Grease containing the urea compound is enclosed in the above-described rolling bearing.

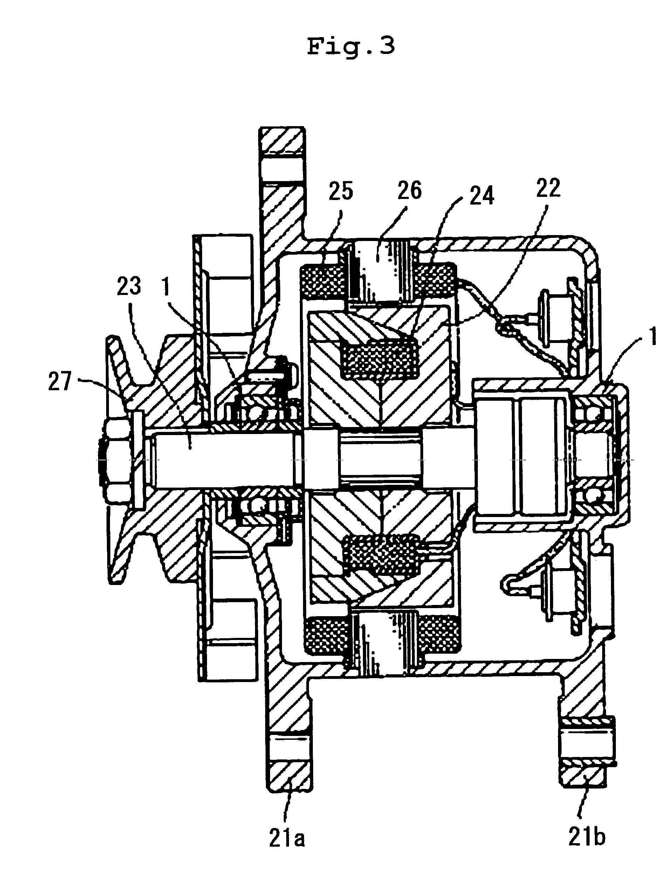

Fig. 3 shows an example of an alternator that is an electric part for use in a vehicle. In the alternator, through a pair of ball bearings 1, a rotating shaft 23 on which a rotor 22 is mounted is rotatably supported by a pair of stationary frames 21a and 21b which form a housing. A rotor coil 24 is mounted on the rotor 22. A stator coil 26 of three rolls is mounted at a phase of 120 degrees on a stator 25 disposed on the periphery of the rotor 22.

Arotational shaft 23 of the rotor 22 is driven by a rotational torque transmitted to a pulley 27 mounted on the front end thereof through a belt (not shown in Fig. 3). The pulley 27 is mounted on the rotational shaft 23 in a cantilevered state. Vibrations are generated when the rotational shaft 23 rotates at a high speed. Thus a ball bearing 1 supporting the pulley 27 is subjected to a very high load.

The alternator for use in the vehicle has the function of receiving the rotation of an engine with a belt to generate electricity, thus supplying an electric power to the electric load of the vehicle and charging a battery. Thus the rolling bearing for use in the alternator is demanded to have a high heat resistance, grease-sealing performance, and durability so that the rolling bearing withstands a very severe condition of environment in which the rolling bearing is driven at a high speed not less than 10000 rpm and at a high temperature not less than 180°C.

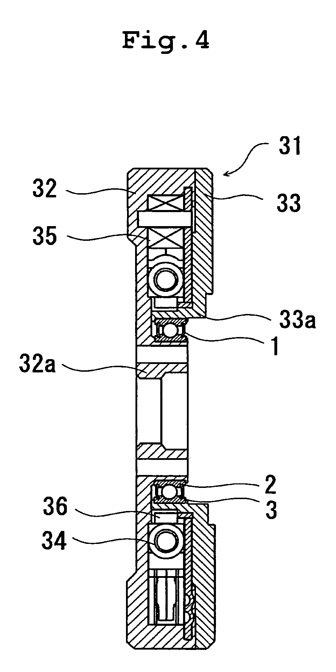

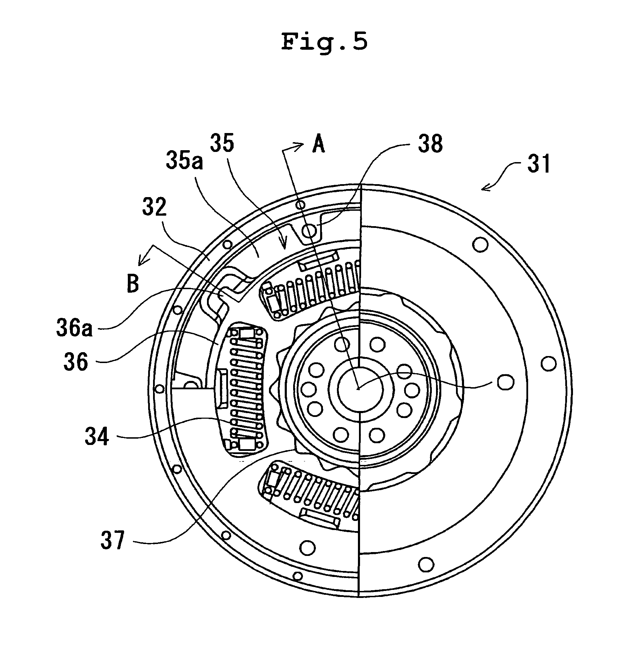

With reference to Figs. 4 and 5, the flywheel damper of the present invention and the construction for supporting the flywheel damper will be described below. Initially the construction for supporting the flywheel damper will be described below. Fig. 4 which is a sectional view, taken along a line A-O-B of Fig. 5. The upper half of Fig. 4 shows a sectional view taken along a line A-O of Fig. 5. The lower half of Fig. 4 shows a sectional view taken along a line O-B of Fig. 5. In the flywheel damper, a flywheel 31 is bisected into an engine-side gyrating mass 32 and a transmission-side gyrating mass 33. A compression spring 34 and a damping mechanism 35 are provided between the engine-side gyrating mass 32 and the transmission-side gyrating mass 33. The flywheel 31 has a damping construction. A bearing 1 supports both engine-side gyrating mass 32 and the transmission-side gyrating mass 33 mutually. As the bearing 1, a rolling bearing is used to accomplish a damping operation smoothly. A torque outputted by the engine is transmitted to a driven system through the engine-side gyrating mass 32 directly connected to a crank shaft (not shown), the compression spring 34, the damping mechanism 35, the transmission-side gyrating mass 33. At this time, in dependence on a magnitude of the torque outputted by the engine, the compression spring 34 flexes and the damping mechanism 35 is actuated, thereby absorbing the fluctuation of the torque. Thus the transmission-side gyrating mass 33 rotates in a damped fluctuation amount with respect to the engine-side gyrating mass 32. The damping mechanism 35 is formed in the oil chamber 35a. A driven plate 36 transmits the rotation of the engine-side gyrating mass 32 to the transmission-side gyratingmass 33 and via the compression spring 34 and the damping mechanism 35. The driven plate 36 is connected to the transmission-side gyrating mass 33 through a serration 37 formed on the inner circumference thereof. A stopper 38 is provided on the engine-side gyrating mass 32 at a position corresponding to a projected portion 36a formed on the outer circumference of the driven plate 36.

The engine-side gyrating mass 32 of the flywheel damper receives and damps a torsional vibration generated by the fluctuation of the torque outputted by the engine, thus transmitting the damped torsional vibration to the transmission-side gyrating mass 33. To this end, the rolling bearing 1 mutually supporting the engine-side gyrating mass 32 and the transmission-side gyrating mass 33 is subjected to the torsional vibration generated by the fluctuation of the torque outputted by the engine, while an inner ring 2 and an outer ring 3 of the rolling bearing 1 are rotating. The rolling bearing 1 is also subjected to a rotational fluctuation in the range of 1000 rpm to 10000 rpmduring the travel of the vehicle. The rolling bearing 1 is used in a very severe condition of environment having a temperature of not less than 200°C, when the vehicle travels at a high speed in summer. That is, the rolling bearing 1 is used in a wide range of a low temperature to a high temperature and a wide range of rotation.

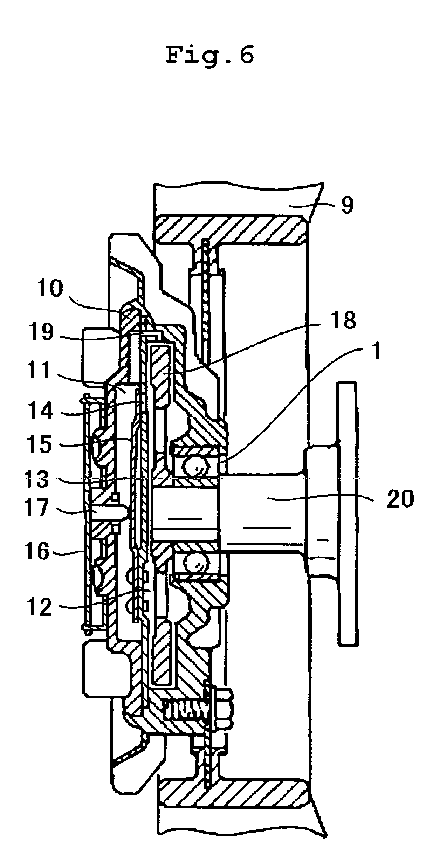

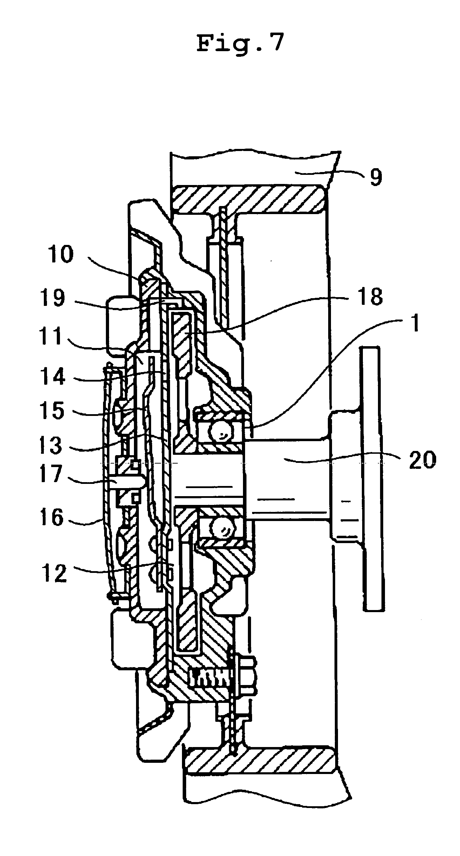

A fan-coupling apparatus for use in the vehicle is described below with reference to Figs. 6 and 7. Fig. 6 is a sectional view showing the fan-coupling apparatus when it rotates at a low speed. Fig. 7 is a sectional view showing the fan-coupling apparatus when it rotates at a high speed.

Inside a casing 10 supporting a cooling fan 9 of the fan-coupling apparatus, there are provided an oil chamber 11 in which a viscous fluid such as silicone oil is filled and a stirring chamber 12 in which a drive disk 18 is incorporated. A port 14 is formed on a partitioning plate 13 interposed between both chambers 11 and 12. An end of a spring 15 for opening and closing the port 14 is fixed to the partitioning plate 13.

A bimetal 16 is mounted on a front surface of the casing 10. A piston 17 of the spring 15 is provided on the bimetal 16. When the temperature of air that has passed through a radiator is not more than a set temperature, for example, 60°C, the bimetal 16 becomes flat. As a result, the piston 17 presses the spring 15, and the spring 15 closes the port 14. When the temperature of the air exceeds the set temperature, the bimetal 16 curves outward as shown in Fig. 7. As a result, the piston 17 does not press the spring 15. Thus the spring 15 deforms elastically and opens the port 14.

Supposing that the temperature of the air that has passed through the radiator is lower than the set temperature of the bimetal 16 when the fan-coupling apparatus having the above-described construction is operated, the viscous fluid inside the oil chamber 11 does not flow into the stirring chamber 12, because the port 14 is closed with the spring 15. At this time, the viscous fluid inside the stirring chamber 12 is fed from a circulation hole 19 formed on the partitioning plate 13 into the oil chamber 11 owing to a rotation of the drive disk 18.

Therefore the amount of the viscous fluid inside the stirring chamber 12 becomes slight. Because a shear resistance of the viscous fluid generated owing to the rotation of the drive disk 18 becomes small, a decreased torque is transmitted to the casing 10. Thus the fan 9 rotates at a low speed.

When the temperature of the air that has passed through the radiator exceeds the set temperature of the bimetal 16, as shown in Fig. 7, the bimetal 16 curves outward, and the piston 17 does not press the spring 15. At this time, the spring 15 deforms elastically in a direction in which the spring 15 moves away from the partitioning plate 13. Thus the port 14 is opened. Thereby the viscous fluid inside the oil chamber 11 flows into the stirring chamber 12 from the port 14.

Therefore the shear resistance of the viscous fluid generated owing to the rotation of the drive disk 18 becomes large. Thus an increased rotational torque is transmitted to the casing 10, and the fan 9 supported by the rolling bearing rotates at a high speed.

Since in the fan-coupling apparatus, the rotation speed of the fan 9 changes in dependence on the change of temperature, warming-up is made fast, and over-cooling of cooling water is prevented. Thereby the engine can be effectively cooled. When the temperature of the engine is low, the fan 9 is placed in a state in which the fan 9 is disconnected from a driving shaft 20. On the other hand, when the temperature of the engine is high, the fan 9 is placed in a state in which the fan 9 is connected to the driving shaft 20. As such, the rolling bearing 1 is used in a wide range from a low temperature to a high temperature and a wide range of rotation.

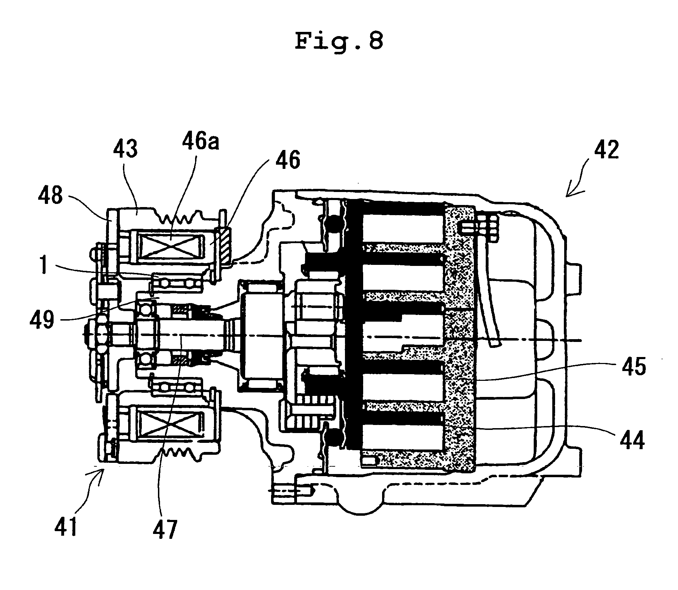

An electromagnetic clutch and a compressor using the rolling bearing for use in the vehicle of the present invention are described below with reference to Fig. 8. Fig. 8 is a sectional view showing an electromagnetic clutch and a scroll type compressor.

The operation of an electromagnetic clutch 41 is described below. The rolling bearing 1 incorporated in a pulley 43 is mounted on a nose portion 49 of a compressor 42. The outer ring of the rolling bearing 1 is always rotated by a belt. When a coil 46a of a stator is energized, a clutch plate 48 fixed to a rotational shaft 47 of the compressor 42 is attracted to the pulley 43 by a magnetic flux generated by electric current flowing through the coil 46a and connected to the pulley 43. Thereby the rotational shaft 47 of the compressor 42 is driven.

The electromagnetic clutch has the function of transmitting a torque from the engine to the compressor and cutting off the torque, adjusting the number of rotations of the compressor in dependence on a selected diameter of the pulley, softening a shock when the compressor is actuated, and absorbing the fluctuation of the torque during a steady rotation of the compressor.

The scroll type compressor 42 has a pair of a movable scroll 44 and a fixed scroll 45. The volume of a space formed between the movable scroll 44 and the fixed scroll 45 becomes smaller while the space is moving from the outer side of the compressor toward the center thereof. Thereby a refrigerant is compressed.

The number of rotations of the rotational shaft 47 of the compressor is not less than 10000 rpm and up to 12000 rpm. The peripheral temperature of the electromagnetic clutch 41 rises to about 180°C in dependence on a condition. Therefore it is necessary for the rolling bearing 1 of the electromagnetic clutch 41 shown in Fig. 8 and other rolling bearings (not shown) inside the compressor to have high durability in the above-described condition.

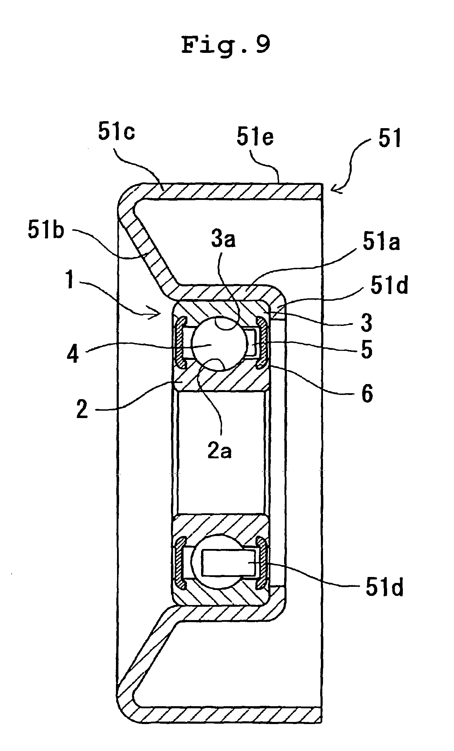

Fig. 9 shows an example of an idler pulley used as a member of tensioning abelt for driving the auxiliary device of the vehicle. Fig. 9 is a sectional view showing the construction of the idler pulley.

The pulley has a body 51 made of a steel plate press and deep groove ball bearings 1, arranged in one row, which are fitted on the inner periphery of the body 51. The body 51 is an annular body constructed of an inner cylindrical part 51a, a flange part 51b extending from one end of the inner cylindrical part 51a to the periphery of the body 51, an outer cylindrical part 51c extending axially from the flange part 51b, and a collar 51d extending from the other end of the inner cylindrical part 51a to the inner periphery of the body 51. An outer ring 3 of the ball bearing 1 is fitted on the inner periphery of the inner cylindrical part 51a. A peripheral surface 51e that contacts a belt driven by the engine is provided on the periphery of the outer cylindrical part 51c. The peripheral surface 51e is brought into contact with the belt to allow the pulley to serve as an idler. It is necessary for the idler pulley to be as durable as the electromagnetic clutch and the compressor coping with shifting the rotation number of the electromagnetic clutch and compressor o high-speed.

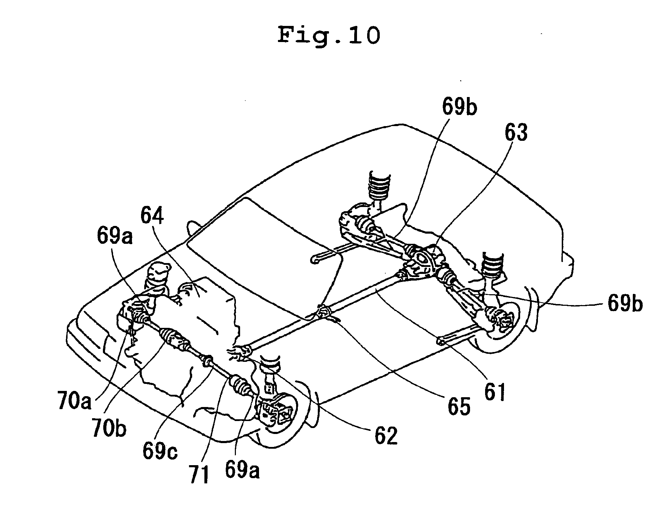

Fig. 10 shows a driving shaft of a four-wheel drive (4WD) vehicle schematically. As shown in Fig. 10, a propeller shaft 61 is a rotational shaft for transmitting the driving force of an engine 64 from a change gear 62 to a final reduction gear 63. The propeller shaft 61 has a constant velocity universal joint capable of transmitting the rotation of the propeller shaft 61 when there is a change in the intersection angle of the shaft between the change gear 62 and the final reduction gear 63, thus coping with a change of the relative position of the change gear 62 and the final reduction gear 63; and a spline and a tube for allowing the propeller shaft 61 to expand and contract in its axial direction. The propeller shaft 61 is basically a two-joint type. But in dependence on the construction of the vehicle and the content of performance demanded for the vehicle, the propeller shaft 61 may be constructed as a three-joint type or a four-joint type. A center supporting member 65 is provided as a means for supporting the propeller shaft 61 on the vehicle body, while the center supporting member 65 is absorbing the vibration of the propeller shaft 61.

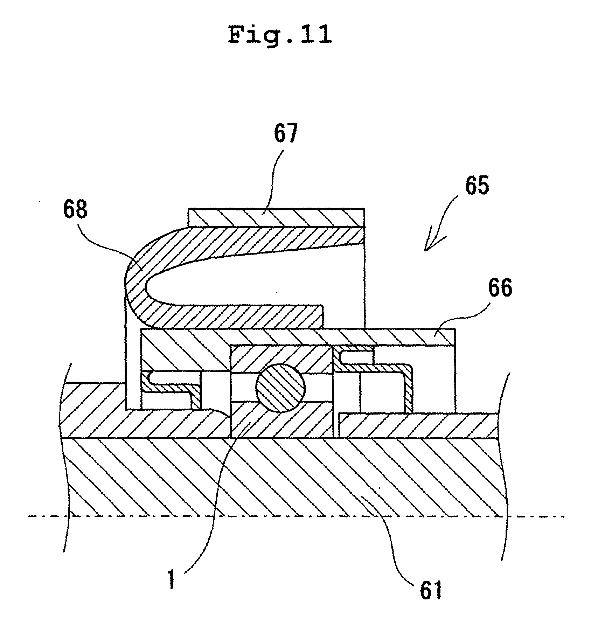

Fig. 11 shows an example of the center supporting member 65. In the center supporting member 65, a cylindrical outer ring 67 is disposed on the outer side of a cylindrical inner ring 66 by spacing the outer ring 67 at a predetermined interval from the cylindrical inner ring 66. A sectionally approximately U-shaped elastic member 68 is disposed between the outer ring 67 and the inner ring 66. The inner ring side of the center supporting member 65 having the above-described construction is mounted on the propeller shaft 61 through the rolling bearing 1. The outer ring side of the center supporting member 65 is mounted on a bracket of the vehicle body. Thereby the center supporting member 65 supports the propeller shaft 61 rotatably, while the center supporting member 65 absorbs the vibration of the propeller shaft 61.

As shown in Fig. 10, the driving shaft transmits the driving force of the engine from the change gear 62 or the final reduction gear to wheels. The driving shaft includes a front driving shaft 69a and a rear driving shaft 69b. It is necessary for the front driving shaft 69a to have a large joint angle in correspondence to the steering angle of the wheels. Therefore a fixed type constant velocity universal joint 70a capable of taking not less than about 40 degrees as an allowable joint angle is provided as a wheel-side joint. It is necessary for a joint at the side of the change gear 62 or a joint at the side of the final reduction gear used in combination with the change gear 62 to absorb the motion of a suspension. Thus a sliding type constant velocity universal joint 70b which does not have a large allowable angle but is axially expandable and contractible is used as the joint at the side of the change gear 62 or the joint at the side of the final reduction gear.

In an ordinary transverse-type engine, the length of the driving shaft extending from the engine is varied. The length-varied shaft has different dynamic elastic properties in dependence on the length thereof. Thus a handle operability is poor. To prevent this, an intermediate driving shaft 69c is provided for the front driving shaft 69a. A supporting member 71 supports the intermediate driving shaft 69c on the vehicle body side near the position where the constant velocity universal joint 70 and the intermediate driving shaft 69c are connected with each other.

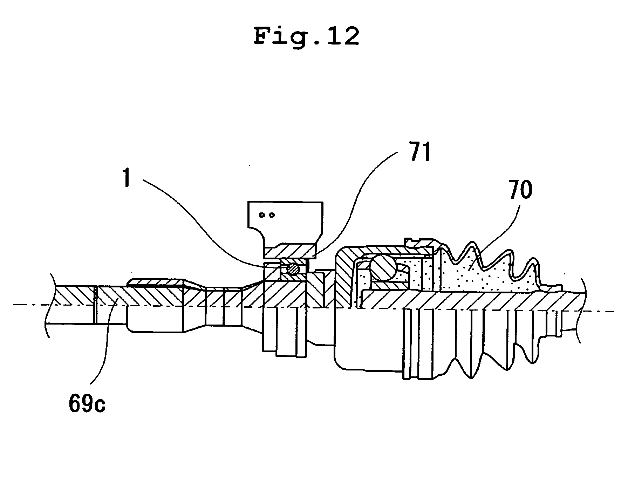

The member 71 for supporting the constant velocity universal joint and the peripheral members are shown in Fig. 12 which is an enlarged sectional view. As shown in Fig. 12, the supporting member 71 rotatably supports the intermediate driving shaft 69c connected to the constant velocity universal joint 70 on the vehicle-body side through the rolling bearing 1.

The rolling bearing for use in the constant velocity universal joint-supporting member and the center supporting member support the driving shaft and are provided at the position shown in Fig. 10. Table 1 shows the portion supported by the rolling bearing for use in the constant velocity universal joint-supporting member and the rolling bearing for use in the center supporting member, the number of rotations of each rolling bearing, the method of supporting the driving shaft, and the atmospheric temperature for each rolling bearing.

**Table 1**

| Usage for rotting bearing | Constant velocity joint support | Center support |
|---|---|---|
| Supporting part | Intermediate drive shaft (front-wheel in FF,4WD and rear-wheel in RR) | Propeller shaft (FR,4WD) |
| Rotation number (rpm) | 3000 or less | 8500 or less |
| Supporing method | Fixed type | Floating type |
| Atomospheric temerature(°C) | -40∼150 | -40∼100 |
| 1) M. Ex. : Mixing Example | | |

When an exhaust pipe is disposed on the periphery of the constant velocity universaljoint-supporting member or the center supporting member in dependence on the design of the vehicle, the temperature on the periphery of the rolling bearing is not less than 150°C. The rolling bearing of the present invention is used mainly in the sliding portion of each of the constant velocity universal joint-supporting member and the center supporting member. As the sealing member, molding of the above-described fluororubber composition is used. Grease containing a urea compound is sealed inside the rolling bearing.

A fluororubber composition that can be used in the present invention is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

The crosslinkable monomer consisting of unsaturated fluoro-hydrocarbon, having two to four carbon atoms, in which a part of hydrogen atoms is substituted with fluorine atoms, trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene are used. Of the above-described crosslinkable monomer, 3, 3, 3-trifluoropropene-1 is most favorable.

As the fourth components of the copolymer, it is possible to use vinylidene fluoride, chlorotrifluoroethylene, perfluoro (alkylvinyl) ether, perfluoro (alcoxyvinyl) ether, perfluoro (alcoxyalkylvinyl) ether, perfluoroalkylalkenyl ether, and perfluoroalcoxyalkenyl ether.

The copolymer composing the fluororubber composition contains 45 to 80 wt%, favorably 50 to 78 wt%, and more favorably 65 to 78 wt% of the tetrafluoroethylene; 10 to 40 wt%, favorably 12 to 30 wt%, and more favorably 15 to 25 wt% of the propylene; and 0.1 to 15 wt%, favorably 2 to 10 wt%, and more favorably 3 to 6 wt% of the crosslinkable monomer for the total amount of the copolymer, respectively.

When the copolymer contains the vinylidene fluoride, the copolymer contains 2 to 20 wt% and favorably 10 to 20 wt% of the vinylidene fluoride. If the copolymer contains more than 20 wt% of the vinylidene fluoride, the resistance of the copolymer to a urea compound deteriorates.

The fluororubber is produced by an emulsion polymerization method or a suspension polymerization method, as disclosed in International Patent Application Laid-Open No. W002/092683.

To allow the fluororubber to be curable, the copolymer is capable of containing the following agents: apolyhydroxy (polyol) curing agent; vulcanization accelerators selected from among quaternary ammonium salts, quaternary phosphonium salts, tertiarysulfoniumsalts; acid acceptors such as calcium hydroxide, magnesium oxide, and the like; fillers such as carbon black, clay, barium sulfate, calcium carbonate, magnesium silicate, and the like; processing aids such as octadecyl amine, wax, and the like; a thermal aging inhibitor; and pigments. For example, the copolymer contains 0.1 to 20 parts by weight and favorably 0.5 to 3 parts by weight of the curing agent, 0.1 to 20 parts by weight and favorably 0.5 to 3 parts by weight of the vulcanization accelerator, 1 to 30 parts by weight and favorably 1 to 7 parts by weight of the acid acceptor, and 5 to 100 of the filler, and 0.1 to 20 parts by weight of the processing aid, for 100 parts by weight of the copolymer, respectively.

In addition to the above-described agents, the copolymer is capable of containing a second curing agent such as an organic peroxide compound at 0.7 to 7 parts by weight and favorably 1 to 3 parts by weight. In addition, fillers and additives to be contained in known rubber compositions can be appropriately used for the copolymer within a range in which they do not damage the resistance of the copolymer to the urea compound and the sealing performance thereof.

Common rubber processing can be adopted in the method of mixing the above-described components or molding the rubber composition. After the components are kneaded by an open roll, a Banbury mixer, a kneader or an enclosed-type mixer, the rubber composition is press-molded (press-cured), extrusion-molded or injection-molded. To improve the property of the rubber composition, it is preferable to secondarily cure the rubber composition by sufficiently heating it in an oven, for example, at 200°C for 24 hours.

Urea grease containing the urea compound is sealed inside the rolling bearing, for use in the vehicle, of the present invention.

Base oil of the urea compound-containing grease can be mixed with mineral oil such as paraffin mineral oil and naphthenic mineral oil; synthetic hydrocarbon oil such as poly-α-olefin (PAO) ; ether oil such as dialkyldiphenyl ether oil, alkyltriphenyl ether oil, and alkyltetraphenyl ether oil; and ester oil such as diester oil, polyol ester oil, complex ester oil of these oil, aromatic ester oil, and carbonate oil. These oil can be used singly or in combination.

In consideration of lubricating performance and lubricating life of the rolling bearing at high temperatures and speeds, it is preferable to use the alkyldiphenyl ether oil, the ester oil, and the poly-α-olefin (PAO).

The urea compound to be contained in the urea compound -containing grease as a thickening agent thereof contains a urea bond (-NHCONH-). As the urea compound, diurea, triurea, tetraurea, and urea urethane are listed. The diurea having two urea bonds in its molecule is preferable and is shown by a chemical formula 1 shown below. Reference symbol R₂ in the chemical formula 1 is a bivalent aromatic hydrocarbon radical having 6 to 15 carbon atoms and shown by a chemical formula 2.

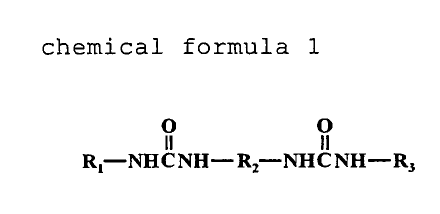

### chemical formula 2

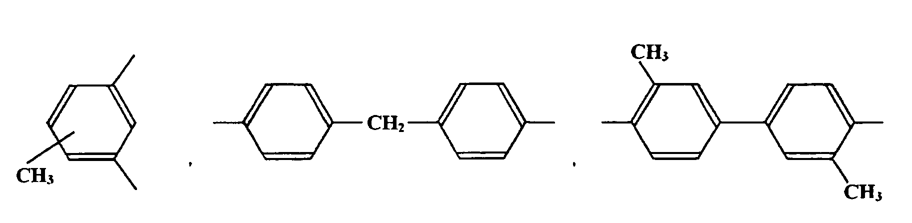

Reference symbols R₁ and R₃ in the chemical formula 1 denote an aliphatic group, an alicyclic group or an aromatic group. Especially when the urea grease is mixed with the fluorine grease, it is preferable to use the urea compound-containing grease in which aliphatic diurea in which R₁ and R₃ are aliphatic groups is used as a thickening agent, because the urea compound-containing grease, in which aliphatic diurea is used as a thickening agent, is easy to be mixed with the fluorine grease. The urea compound is obtained by reaction between a diisocyanate compound and an amine compound whose equivalent weight is equal to that of the diisocyanate compound.

It is preferable that the urea compound-containing grease contains 95 to 70 wt% of the base oil and 5 to 30 wt% of the urea compound for the total amount thereof. By setting the mixing ratio of the base oil and the urea compound to this range, the grease leaks little from the bearing and the penetration of the urea compound-containing grease can be adjusted appropriately to keep the lubricity thereof for a long time.

When the rolling bearing is subjected to a severe temperature condition, it is possible to use a mixture of the grease containing the urea compound as its thickening agent and the fluorine grease.

It is preferable that the fluorine grease contains polytetrafluoroethylene as its thickening agent and perfluoro polyether (PFPE) as its base oil.

It is preferable that the fluorine grease contains 50 to 90 wt% of perfluoro polyether oil and 50 to 10 wt% of fluorocarbon resin powder for the total amount of the fluorine grease. By setting the mixing ratio between the perfluoro polyether oil and the fluorocarbon resin powder to this range, the fluorine grease leaks little from the rolling bearing, and the penetration of the fluorine grease can be adjusted preferably to keep the torque low for a long time.

It is preferable that the mixing ratio (weight ratio) between the urea grease and the fluorine grease of the mixed grease is set to 30:70 to 75:25. When the urea grease is mixed with the fluorine grease, it is preferable that the urea grease contains the aliphatic diurea as its thickening agent and the ester oil as its base oil and that the fluorine grease contains PTFE as its thickening agent and PFPE as its base oil.

The urea compound-containing grease and the mixed grease used in four kinds of the examples are shown below. Those four kinds of examples are divided into two kinds of examples concerning with the rolling bearing and the sealing member of the rolling bearing for the use in vehicle and those two kinds of example contains the example of the present invention and the comparison examples,respectively.

### (1) Urea compound-containing grease 1

Produced by Klueber Inc. : " Asonic HQ72-102" (thickening agent: aliphatic diurea, base oil: aromatic polyester oil, kinematic viscosity at 40°C: 100 mm²/s)

### (2) Urea compound-containing grease 2

Base oil which is mixed oil of 20 wt% of poly-α-olefin oil (produced by Nippon Steel Chemical Inc., trade name: Synfluid 601) and 80 wt% of alkyldiphenyl ether oil (produced by Matsumura Sekiyu Inc., trade name: LB100) was prepared. The base oil was divided into two. Then 4,4-diphenylmethane diisocyanate was dissolved in the half of the base oil. P-toluidine which was twice as large as that of the 4,4-diphenylmethane diisocyanate in the equivalent weight was dissolved in the remaining half of the base oil. The 4,4-diphenylmethane diisocyanate was dissolved in the half of the base oil in such a way that the base oil contained the 4,4-diphenylmethane diisocyanate as the aromatic diurea compound at 20 wt% of the whole amount of the grease composition. While the solution containing the 4, 4-diphenylmethane diisocyanate was being stirred, the solution containing the p-toluidine was added to the solution containing the 4,4-diphenylmethane diisocyanate. Thereafter the mixed solution was kept stirred at 100 to 120°C for 30 minutes. Thereby the aromatic diurea compound was deposited in the base oil. One part by weight of sorbitan triolate, one part by weight of sodium sebacate, and two parts by weight of alkyldiphenylamine which is an antioxidant were added to 100 parts by weight of the grease. Thereafter, the solution was stirred at 100 to 120°C for 10 minutes. Then the mixture was cooled and made homogeneous by a three-roll mill to obtain a grease composition.

### (3) Mixed grease

For the total amount of grease, 33 wt% of fluorocarbonpowder ("Vidax" produced by DuPont Inc.) was added to 67 wt% of perfluoro polyether oil ("Krytox 240 AC" produced by DuPont Inc.). The mixture was stirred and supplied to a roll mill. Thereby semisolid fluorine grease containing PTFE powder as its thickening agent and PFPE as its base oil was obtained.

One mole of diisocyanate was dissolved in a half amount of 88 wt% of aromatic ester oil (base oil: "Adeka Prover T90" produced by Asahi Denka Inc.) for the total amount of grease. Two moles of monoamine was dissolved in the remaining half amount of the aromatic ester oil. Thereafter the solution of the aromatic ester oil in which the monoamine was dissolved was added to the solution of the aromatic ester oil in which the diisocyanate was dissolved, while stirring was being made. The stirring was continued at 100 to 120°C for 30 minutes, and the isocyanate and the monomer reacted. As a result, 12 wt% of the urea compound (R₁ and R₃ in chemical formula 1 denote aliphatic group, R₂ denote aliphatic diurea which is diphenylmethane group) for the total amount of grease was deposited in the base oil. Thereafter the urea compound was supplied to a roll mill. Thereby semisolid urea compound-containing grease containing the urea compound as its thickening agent and synthetic oil as its base oil was obtained.

Mixed grease of the fluorine grease and the urea compound-containing grease was obtained by stirring a mixture of 40 wt% of the fluorine grease, 59 wt% of the urea compound-containing grease, and 1 wt% of an amine-containing corrosion inhibitor containing mineral oil as its base.

Rubber compositions used in the examples and the comparison examples are shown below.

An unvulcani zed rubber composition was obtained by kneading the components shown in table 2 by using an open roll at 50°C. The mixing ratio of each component is as shown in table 2 . The detail of the components show in table 2 are explained below.
(1) Fluororubber 1: VTR8802 (curing agent was added) produced by DuPont·Dow·Elastomers Inc.
(2) Fluororubber 2: "Aflas 150" produced by Asahi Glass Inc.
(3) Fluororubber 3 : "A32J" produced by DuPont·Dow·Elasotmers Inc.
(4) Acrylic rubber: "AR71" produced by Zeon Inc.
(5) Magnesium oxide: "Kyowa Mag 150" produced by Kyowa Chemical Industry Inc.
(6) Calsium hydroxide: "Calvit" produced by Ohmi Chemical Industry Inc.
(7) Carbon 1: "N990" produced by Engineered Carbons Inc.
(8) Co-crosslinking agent: "TAIC" produced by Nippon Kasei Chemical Inc.
(9) Curing agent: "Perkadox 14" produced by Kayaku Akzo Corporation.
(10) Carbon 2: "Seast 3" produced by Tokai Carbon Inc.
(11) Sulfur: "Sulfax PMC" produced by Tsurumi Chemical Industry Inc.
(12) Antioxidant: "NOCRAC CD" produced by Ouchishinko Chemical Industrial Inc.
(13) Sodium stearate: "NS soap" produced by Kao Corporation.
(14) Potassium stearate: "Nonsoul SK-1" produced by NOF Corporation.

**Table 2**

| | M. Ex. ¹⁾ 1 | M. Ex. 2 | M. Ex. 3 | M. Ex. 4 |
|---|---|---|---|---|
| Mixing ( part by weight) | | | | |
| Fluoro rubber(1) | 100.0 | - | - | - |
| Fluoro rubber(2) | - | 100.0 | - | - |
| Fluoro rubber(3) | - | - | 100.0 | - |
| Acrylic rubber | - | - | - | 100.0 |
| Magnesium oxide | 8.0 | - | 3.0 | - |
| Calsium hydroxide | - | - | 6.0 | - |
| Carbon (1) | 30.0 | 35.0 | 20.0 | - |
| Co-crosslinking agent | - | 5.0 | - | - |
| Vulcanizing agent | - | 1.0 | - | - |
| Carbon (2) | - | - | - | 50.0 |
| Stearic acid | - | - | - | 1.0 |
| Antioxidant | - | - | - | 2.0 |
| Sulfur | - | - | - | 0.3 |
| Sodium stearate | - | - | - | 3.0 |
| Potassium stearate | - | - | - | 0.5 |

| | | | | |
|---|---|---|---|---|
| 1) M. Ex. : Mixing Example | | | | |

Examples of sealing member1 through 5 and comparison examples of sealing member 1 through 9

The above-described unvulcanized rubber composition was cured by using a curing press machine. Thereby a cured molding of each of the examples and the comparison examples was obtained. The temperature of the die was set to 170°C. The primary cure was performed at 170°C for 12 minutes. Thereafter secondary cure was carried out in a constant temperature chamber at 200°C for 24 hours for the mixing examples 1 through 3 and 170°C for 4 hours for the mixing example 4.

The obtained cured moldings were punched into a predetermined configuration to obtain a specimen of No. 3 of JIS K 6251. The specimens were immersed in the above-described urea compound-containing grease and the above-described mixed grease at 170°C or 200°C for 1000 hours to measure property values thereof before and after the immersion. More specifically, thehardness, tensile strength, tensile elongation, and volume of each specimen were measured to evaluate a change in the hardness, the rate of change in the tensile strength, the rate of change in the tensile elongation, and the rate of change in the volume. The measuring conditions were set in accordance with JIS K 6251 , JIS K 6253, JIS K 6258. The results are shown in tables 3 through 5. Reference symbol * in tables 4 and 5 indicates "unmeasurable".

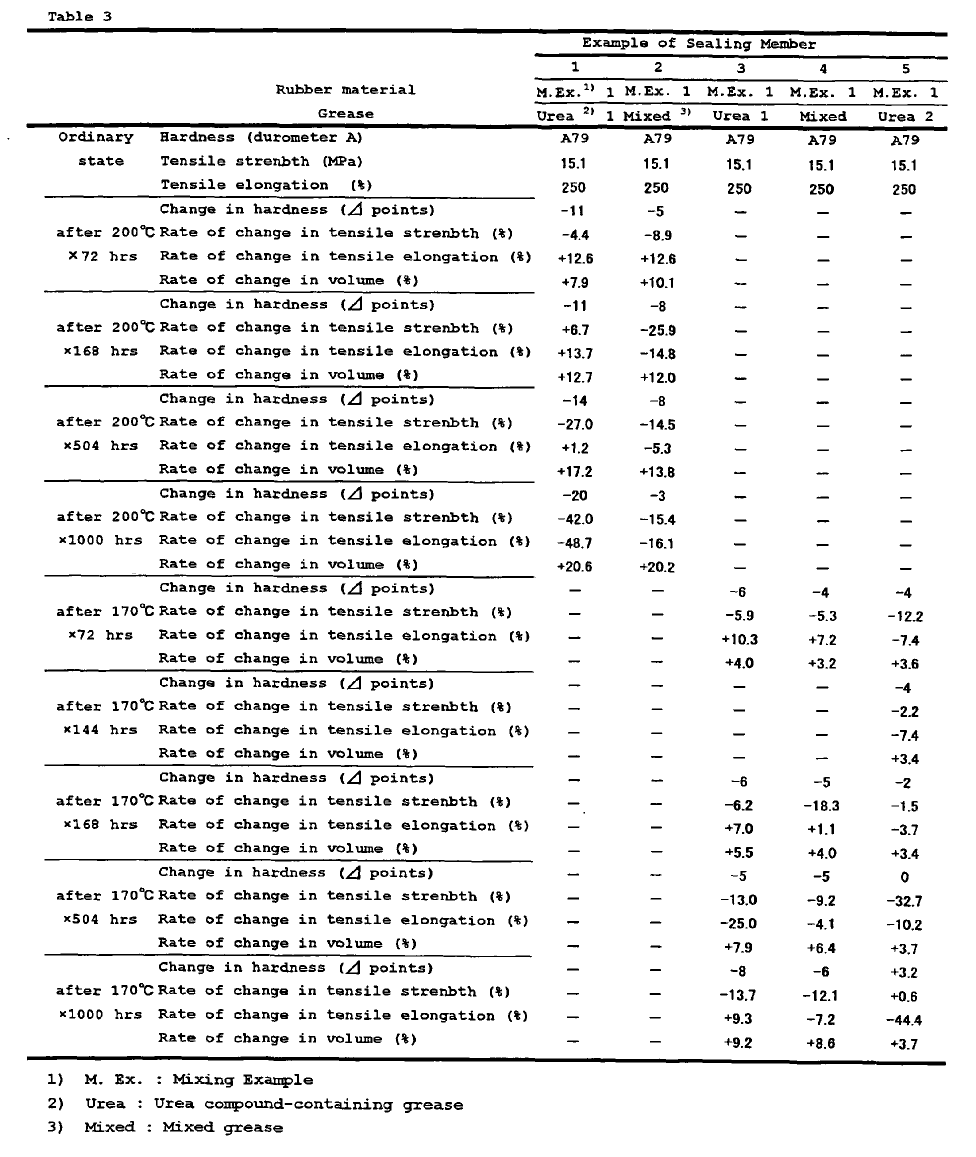

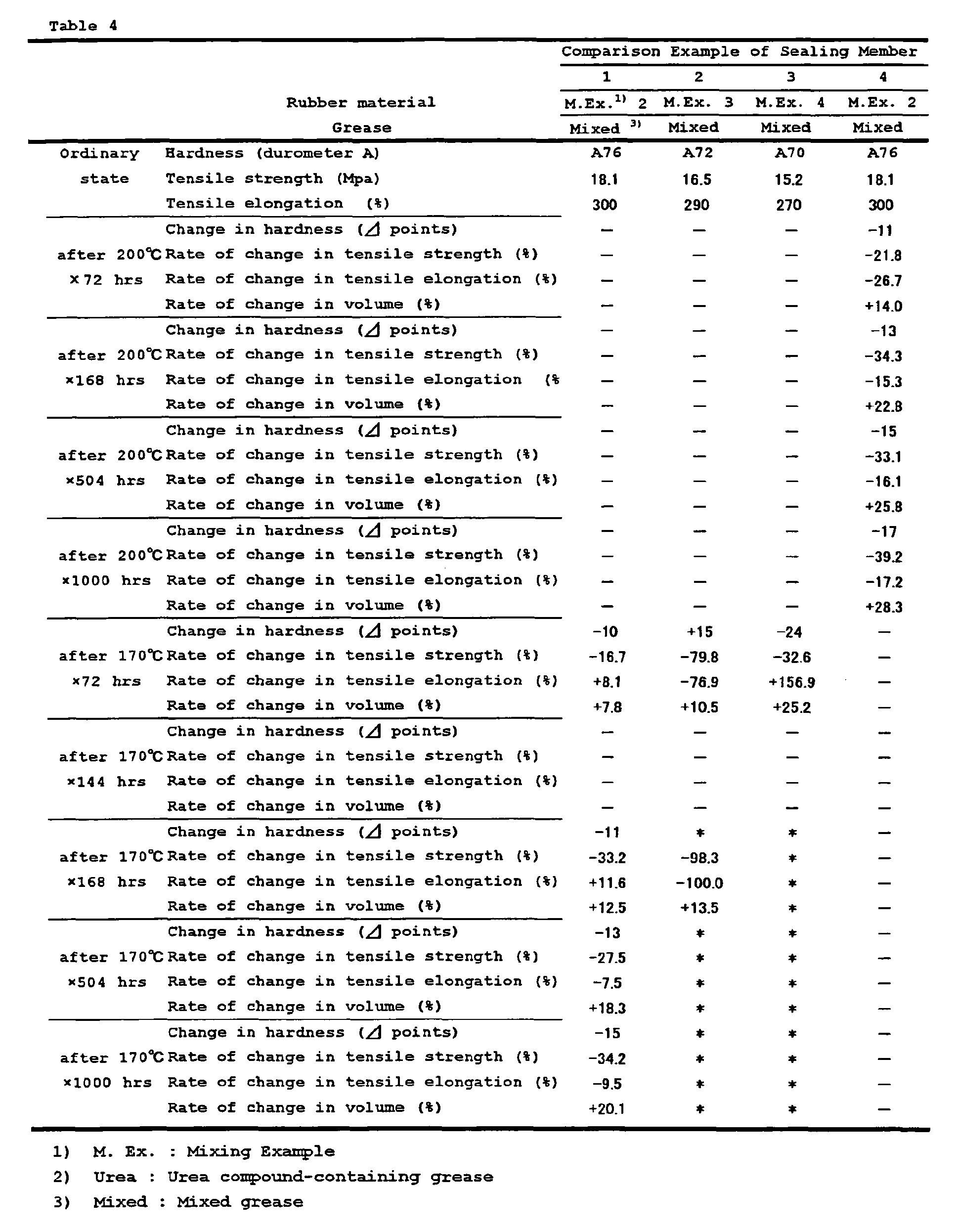

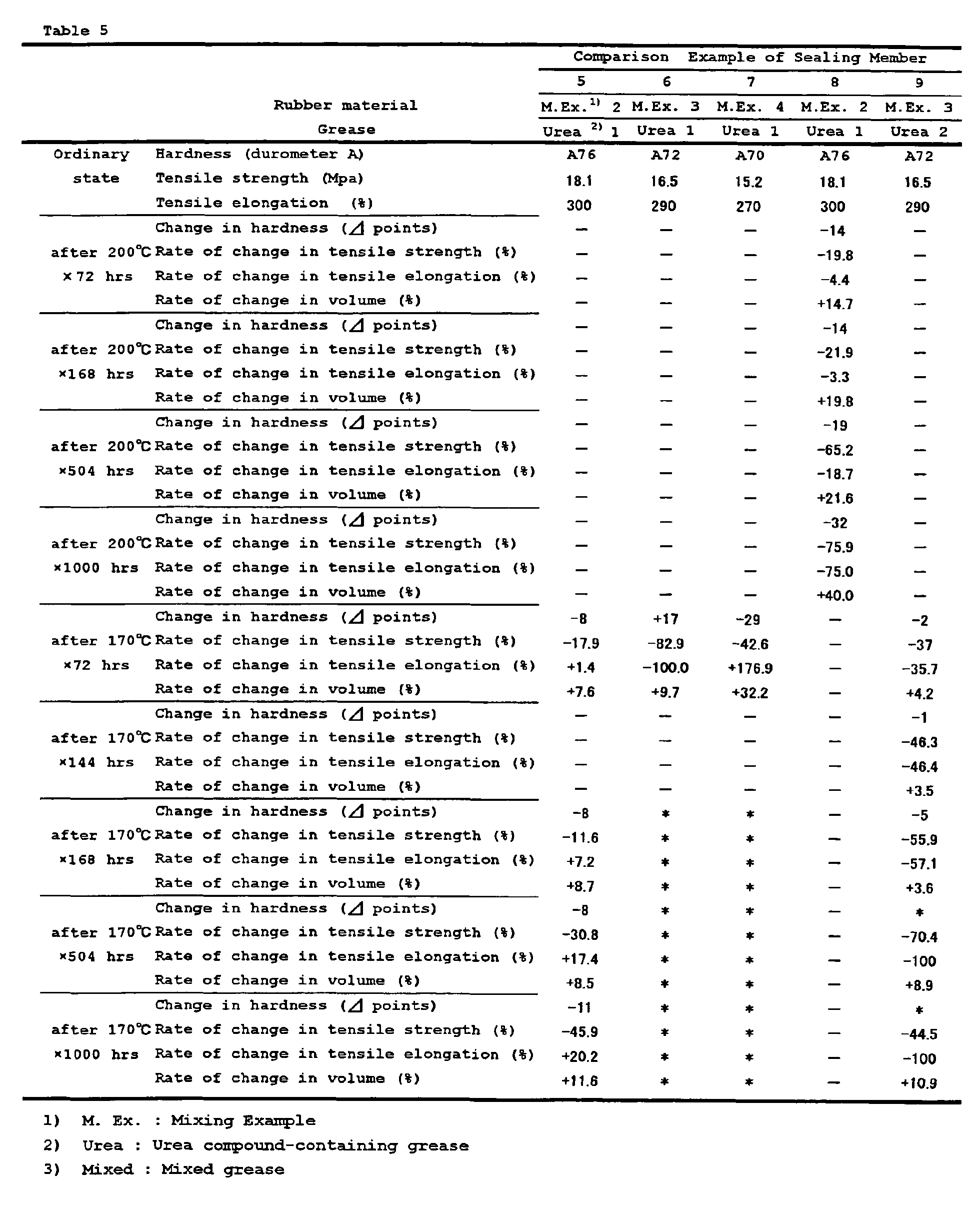

The specimens of the examples of sealing member 1 through 5 deteriorated to a low extent when they were immersed in the urea compound-containing grease and the mixed grease at high temperatures for a long time. This indicates that the specimens of the examples of sealing member 1 through 5 were resistant to the urea compound-containing grease and the mixed grease

### Example 1

An unvulcanized rubber composition of the mixing example 1 was molded onto the core of an iron plate to obtain a non-contact-type rubber seal (see Fig. 2) for abearing 6204 (inner diameter: 20mm, outer diameter: 47mm, width: 14mm). The rubber seal was incorporated in a specimen bearing washed cleanly with petroleum benzine. A mixture of the fluorine grease and the urea compound-containing grease was enclosed inside the bearing. The mixture occupied 38 volume % of the entire space inside thebearing. The rolling bearing was evaluated in a high-temperature durability test. Table 6 shows results.

In the high-temperature durability test 1, the rolling bearing was rotated at a radial load of 67N, a thrust load of 67N, 10000 rpm, and an atmospheric temperature of 220°C. The period of time required for the motor to stop owing to an overload was measured. The test time was 1000 hours at maximum.

### Example 2

A non-contact-type rubber seal obtained in a manner similar to that used in the example 1 was incorporated in a specimen bearing washed cleanly with petroleum benzine. The urea compound-containing grease 2 was enclosed inside the bearing, and occupied 38 volume % of the entire space inside the bearing. The rolling bearing wasevaluatedin ahigh-temperature durability test 2. Table 6 shows results.

In the high-temperature durability test 2, the rolling bearing was rotated at a radial load of 67N, a thrust load of 67N, 10000 rpm, and an atmospheric temperature of 180°C. The period of time required for the motor to stop owing to an overload was measured. The test time was 500 hours at maximum.

### Example 3

Anon-contact-type rubber seal obtained in a manner similar to that used in the example 1 was incorporated in a specimenbearing washed cleanly with petroleum benzine. Mixed grease was sealed inside the bearing. The mixed grease occupied 38% of the volume of the entire space inside the bearing. The rolling bearing was evaluated in a high-temperature durability test 3. Table 7 shows test results.

In the high-temperature durability test 3, the rolling bearing 1 disposed at the side of the pulley 27 of the alternator shown in Fig. 3 was used. The alternator was operated in the following conditions: The load applied to the pulley 27: 3.2 kN(load applied to bearing 1 was about 4.5 kN), the number of rotations of the rolling bearing : 18000 rpm, and temperature: roomtemperature. Theperiodoftimerequiredfortheloadapplied to a motor which drove the alternator to rise owing to an excessive rotational torque caused by deterioration of the grease sealed in the bearing 1 was measured. Alternatively the period of time required for vibration detected by a vibration pick-up mounted in the neighborhood of the outer ring of the bearing 1 to rise was measured. The test time was 2000 hours at maximum.

### Comparison examples 1 and 2

By using the mixing examples 2 and 3, a specimen rolling bearing of the comparison example 1 and that of the comparison example 2 were formed in a manner similar to that used in the example 1. A high-temperature durability test 1 was conducted in a manner similar to that conducted in the example 1. Table 6 shows the test results.

### Comparison examples 3 and 4

By using the mixing examples 2 and 3, a specimen rolling bearing of the comparison example 3 and that of the comparison example 4 were formed in a manner similar to that used in the example 2. A high-temperature durability test 2 was conducted in a manner similar to that conducted in the example 2. Table 6 shows the test results.

**Table 6**

| | Example | | Comparison Example | | | |
|---|---|---|---|---|---|---|
| | 1 | 2 | 1 | 2 | 3 | 4 |
| Rubber material | M.Ex.¹⁾1 | M.Ex 1 | M.Ex. 2 | M.Ex. 3 | M.Ex. 3 | M.Ex. 4 |
| Life Test 1 (hr) | 1000 or more | - | 570 | 340 | - | - |
| Life Test 2 (hr) | - | 500 or more | - | - | 320 | 150 |

| | | | | | | |
|---|---|---|---|---|---|---|
| 1) M. Ex. : Mixing Example | | | | | | |

In the specimen of the examples 1 and 2, the rolling bearing could run for not less than 1000 hours and not less than 500 hours ,respectively, and the seal of both example 1 and 2 did not crack visually in the inspection made after the high-temperature durability test.

The specimen of each of the comparison examples 1 and 2 had seizing in a shorter period of time than the period of time in which the specimen of the example 1 had seizing. The specimen of each of the comparison examples 3 and 4 had seizing in a shorter period of time than the period of time in which the specimen of the example 2 had seizing. It is supposed that the leak of the grease which occurred during the operation caused the specimen of each of the comparison examples 1, 2, 3, and 4 to have a short life. In the specimen of the comparison examples 2 and 4, a large number of cracks were found at the portion of seal lip in the inspection made after the high-temperature durability test finished.

### Comparison examples 5 and 6

By using the mixing examples 2 and 3, a specimen rolling bearing of the comparison example 5 and that of the comparison example 6 were formed in a manner similar to that used in the example 1. A high-temperature durability test was conducted in a manner similar to that conducted in the example 3. Table 7 shows the test results.

**Table 7**

| | Example | Comparison Example | |
|---|---|---|---|
| | 3 | 5 | 6 |
| Rubber material | M.Ex.¹⁾ 1 | M.Ex. 2 | M.Ex. 3 |
| Life (hr) | 2000 or more | 950 | 580 |

| | | | |
|---|---|---|---|
| 1) M. Ex. : Mixing Example | | | |

The rubber seal of the example 3 allowed the motor to operate for 2000 hours. No crack was found visually after the test finished.

The specimen of each of the comparison examples 5 and 6 had seizing in a shorter period of time than that of example 3. It is supposed that the leak of the grease which occurred during the operation caused the specimen of the comparison examples 5 and 6 to have a short life. In the specimen of the comparison example 5 and 6, a large number of cracks were found at the portion of contact in the seal after the test finished.

The sealing member used in the rolling bearing of the present invention is resistant to the urea compound-containing grease. Therefore the rolling bearing which contains above-described sealing member is applicable to be used for electric auxiliary devices or supporting members of the vehicle at a high temperature.

## Claims

1. A rolling bearing, for use in a vehicle, which is used for an electric auxiliary device of a vehicle rotatably supporting a rotating portion provided in said electric auxiliary device or for a member rotatably supporting a driving shaft of said vehicle on a body of said vehicle, comprising
an inner ring,
an outer ring,
a plurality of rolling elements disposed between said inner ring and said outer ring, and
a sealing member, provided at an opening portion of said inner ring and said outer ring disposed at an axial end thereof, for sealing grease disposed on a periphery of said rolling elements,
wherein said sealing member is at least contacted to said grease, and is formed by molding a curable fluororubber composition, which comprises a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms,
wherein said grease contains a urea compound.

2. A rolling bearing for use in a vehicle according to claim 1, wherein saidcrosslinkablemonomer is at least onemonomer selected from the group consisting of trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene.

3. A rolling bearing for use in a vehicle according to claim 1, wherein said copolymer contains 45 to 80 wt% of said tetrafluoroethylene, 10 to 40 wt% of said propylene, and 0.1 to 15 wt% of said crosslinkable monomer for a total amount of said copolymer, respectively.

4. A rolling bearing for use in a vehicle according to claim 1, wherein said copolymer contains vinylidene fluoride.

5. A rolling bearing for use in a vehicle according to claim 4, wherein said vinylidene fluoride is contained at 2 to 20 wt% for a total amount of said copolymer.

6. A rolling bearing for use in a vehicle according to claim 3, wherein said fluororubber composition contains 0.1 to 20 parts by weight of a curing agent, 0.1 to 20 parts by weight of a vulcanization accelerator, 1 to 30 of an acid acceptor, and 5 to 100 parts by weight of a filler, and 0.1 to 20 parts by weight of a processing aid for 100 parts by weight of said copolymer, respectively.

7. A rolling bearing for use in a vehicle according to claim 5, wherein said fluororubber composition contains 0.1 to 20 parts by weight of a curing agent, 0.1 to 20 parts by weight of a vulcanization accelerator, 1 to 30 of an acid acceptor, and 5 to 100 parts by weight of a filler, and 0.1 to 20 parts by weight of a processing aid for 100 parts by weight of said copolymer, respectively.

8. A rolling bearing for use in a vehicle according to claim 1, wherein said sealing member consists of said rubber molding.

9. A rolling bearing for use in a vehicle according to claim 1, wherein said sealing member is a composite of said rubber molding and a rigid plate.

10. A rolling bearing for use in a vehicle according to claim 9, wherein said rigid plate is a metal plate.

11. A rolling bearing for use in a vehicle according to claim 1, wherein grease to be enclosed in said rolling bearing is urea grease.

12. A rolling bearing for use in a vehicle according to claim 11, wherein a base oil of said urea grease is at least one base oil selected from the group consisting of alkyldiphenyl ether oil, ester oil, poly-α-olefin oil; and a thickening agent of said urea grease is diurea.

13. A rolling bearing for use in a vehicle according to claim 1, wherein said grease to be enclosed in said rolling bearing is mixed grease of said urea grease and fluorine grease.

14. A rolling bearing for use in a vehicle according to claim 13, wherein a base oil of said fluorine grease is perfluoro polyether oil; and a thickening agent of said fluorine grease is polytetrafluoroethylene.

15. A rolling bearing for use in a vehicle according to claim 13, wherein a mixing ratio (weight ratio) between said urea grease and said fluorine grease of said mixed grease is set to 30:70 to 75:25.

16. A rolling bearing for use in a vehicle according to claim 1, wherein said rolling bearing for use in said electric auxiliary device is used for an alternator, a flywheel damper, a fan coupling, an electromagnetic clutch, a compressor or an idler pulley,
said rolling bearing for use in said alternator rotatably supports on a stationary member a rotational shaft of a rotor which has a pulley mounted on one end thereof and is driven by an output of an engine,
said rolling bearing for use in said flywheel damper mutually supports a transmission-side gyrating mass of a construction for supporting said flywheel damper and an engine-side gyrating mass, of said construction for supporting said flywheel damper, which receives and damps a torsional vibration generated by a fluctuation of a torque outputted by an engine and transmits said damped torsional vibration to said transmission-side gyrating mass,
said rolling bearing for use in said fan coupling supports a rotational shaft of a fan-coupling apparatus which changes the number of rotations of an engine-cooling fan according to a change of an atmospheric temperature,
said rolling bearing for use in said electromagnetic clutch, said compressor or said idler pulley rotatably supports a rotating portion provided in said electric auxiliary device, and
said rolling bearing, for use in a vehicle, which is used for a supporting member rotatably supporting a driving shaft of said vehicle on a body of said vehicle is a rolling bearing for use in a constant velocity universal joint-supporting member or a center supporting member.

17. A construction for supporting a flywheel damper wherein a rolling bearing, for use in said flywheel damper, according to claim 1 mutually supports a transmission-side gyrating mass and an engine-side gyrating mass which receives and damps a torsional vibration generated by a fluctuation of a torque outputtedby an engine and transmits said damped torsional vibration to said transmission-side gyrating mass.

18. In a fan-coupling apparatus wherein a stirring chamber and an oil chamber in which a viscous fluid such as silicone oil is filled are provided inside a casing supporting an engine-cooling fan; a port is formed on a partitioning plate interposed between said oil chamber and said stirring chamber; an open degree-adjusting means for adjusting an open degree of said port according to a change of an atmospheric temperature; a drive disk is incorporated in said stirring chamber; a rotation of said drive disk is transmitted to said case through a viscous fluid which has flowed into said stirring chamber, a rolling bearing according to claim 1 supports a rotational shaft of said drive disk.

19. A rolling bearing for use in a vehicle according to claim 1, wherein said supporting member is a constant velocity universal joint-supporting member supporting a driving shaft of a front engine and front drive vehicle, a rear engine and rear drive vehicle or a four-wheel drive vehicle.

20. A rolling bearing for use in a vehicle according to claim 1, wherein said supporting member is a center supporting member supporting a propeller shaft of a front engine and rear drive vehicle or a four-wheel drive vehicle.
